# EUROPÄISCHE PATENTSCHRIFT

(11) **EP 2 190 681 B1**
(45) Veröffentlichungstag und Bekanntmachung des Hinweises auf die Patenterteilung: **10.12.2014**
(21) Anmeldenummer: 08786030.0
(22) Anmeldetag: 10.07.2008
(51) Int. Cl.: B60C 23/00

(54) **SENSORANORDNUNG UND VERFAHREN ZUM BETRIEB EINER SENSORANORDNUNG**
SENSOR ARRANGEMENT AND METHOD FOR OPERATING A SENSOR ARRANGEMENT
DISPOSITIF DE DÉTECTION ET PROCÉDÉ POUR FAIRE FONCTIONNER UN DISPOSITIF DE DÉTECTION

(30) Priorität: 10.09.2007 DE 102007043077
(43) Veröffentlichungstag der Anmeldung: 02.06.2010
(73) Patentinhaber: Robert Bosch GmbH, 70442 Stuttgart (DE)
(72) Erfinder: BUCK, Thomas, 71732 Tamm (DE); PANNEK, Thorsten, 70176 Stuttgart (DE); KLETT, Gustav, 72116 Moessingen (DE); KECK, Marian, 71083 Herrenberg (DE)
(86) Internationale Anmeldenummer: PCT/EP2008/058974
(87) Internationale Veröffentlichungsnummer: WO 2009/033847

(56) Entgegenhaltungen:
- WO-A-2005/082645
- GB-A- 1 505 804

## Beschreibung

### Stand der Technik

Die Erfindung geht aus von einer Sensoranordnung nach dem Oberbegriff des Anspruchs 1.

Solche Sensoranordnungen sind allgemein bekannt. Beispielsweise ist aus der Druckschrift DE 102 40 446 A1 ein Sensormodul bekannt, wobei das Sensormodul mindestens ein Sensorelement und eine Übertragungseinrichtung zur schnurlosen Datenübertragung aufweist. Die Übertragungseinrichtung ist in das Sensormodul integriert und an das Sensorelement galvanisch angekoppelt. Nachteilig daran ist, dass eine zuverlässige Realisierung eines elektrisch leitfähigen Kontaktes zwischen dem Sensorelement und der Übertragungseinrichtung in einer vergleichsweise stark beanspruchenden Umgebung, insbesondere in einem Reifen, und gleichzeitig eine sichere Abdichtung eines Sensorgehäuses mit einer Kontaktdurchführung, insbesondere gegen Feuchtigkeit, nur sehr aufwändig und damit kostenintensiv zu realisieren sind.

Aus der WO 2005/082645 A1 ist eine Einrichtung zur drahtlosen Übertragung elektrischer Energie auf in Kraftfahrzeugreifen angeordneten Sensoren sowie zur Datenübertragung zwischen den Sensoren und am Fahrzeug befestigten Gegenstellen. Hierzu ist eine Radkasteneinheit vorgesehen, die eine Sende- und eine Empfangsantenne aufweist. Die Übertragung zum und vom Sensor im Fahrzeugreifen erfolgt dabei über einen in den Reifen koaxial eingebetteten Ringleiter.

### Offenbarung der Erfindung

Die erfindungsgemäße Sensoranordnung und das erfindungsgemäße Verfahren zum Betrieb einer Sensoranordnung gemäß den nebengeordneten Ansprüchen haben gegenüber dem Stand der Technik den Vorteil, dass keine galvanische Ankopplung zwischen dem Sensormodul und der dritten Antenne zum Empfang und/oder zur Ausstrahlung elektromagnetischer Signal vorgesehen ist. Folglich wird kein mechanisch oder chemisch beanspruchbarer elektrisch leitfähiger Kontakt in die Sensoranordnung integriert und das Sensormodul wird vollständig von einem geschlossenen, kompakten Modulgehäuse umschlossen. Im Vergleich zum Stand der Technik ist die erfindungsgemäße Sensoranordnung daher wesentlich kostengünstiger herstellbar und gewährleistet gleichzeitig eine erheblich gesteigerte Zuverlässigkeit, insbesondere bei der Integration in einen Reifen, in welchem sowohl starke mechanische Beanspruchungen der Sensoranordnung durch Vibrationen, Spannungen, hohe Beschleunigungskräfte etc., als auch hohe chemische Belastungen durch Motoröle, Abgase, Feuchtigkeit, etc. auftreten. Ein weiterer Vorteil der vorliegenden Erfindung ist die Integration des Sensorelements in das vergleichsweise kompakte Modulgehäuse, wobei trotz der Kompaktheit gleichzeitig eine hohe Sende- und/oder Empfangsleistung der Sensoranordnung erzielt wird. Dies wird durch die Induktionseinheit außerhalb des Modulgehäuses ermöglicht, welche insbesondere das Sensormodul zumindest teilweise umschließt und wobei die Signalübertragung zwischen dem Sensorelement und der Induktionseinheit über eine rein induktive Übertragung zwischen der ersten und der zweiten Antenne erfolgt. Durch diese rein induktive und vergleichsweise kurzreichweitige Signalübertragung wird eine Realisation der ersten und der zweiten Antenne mit vergleichsweise geringen Ausmaßen ermöglicht. Die induktive Signalübertragung ist bevorzugt eine Signalübertragung die auf der Erzeugung eines ersten elektrischen Stromflusses in der ersten bzw. der zweiten Antenne in Abhängigkeit einer zeitlichen Änderungen eines magnetischen Flusses basiert, wobei der magnetische Fluss aus einer zeitlichen Änderung der Stromstärke eines zweiten Stromflusses durch die zweite bzw. die erste Antenne resultiert. Die Abstrahlung und/oder der Empfang von Signalen durch die dritte Antenne basiert insbesondere auf elektromagnetischen Wechselfeldern, welche im Gegensatz zur induktiven Signalübertragung eine größere Reichweite aufweisen. Bevorzugt dient die dritte Antenne zur Kommunikation des Sensorelements mit einem Fahrzeugkontrollsystem, wobei besonders bevorzugt die Abfrage und/oder das Senden von Reifenkontrolldaten vorgesehen ist. Ein weiterer Vorteil der vorliegenden Erfindung ist, dass die Induktionseinheit in einem Reifen vormontierbar ist, wobei bevorzugt standardisierte Eigenschaften, wie bspw. Impedanz und Antennengüte, festgelegt sind, so dass je nach Anforderung ein beliebiges Sensormodul in einem zeitlich späteren weiteren Herstellungsschritt in den Reifen optional integrierbar ist. Besonders bevorzugt ist die Integration der Übertragungseinheit in den Reifen im Herstellungsprozess des Reifens durch direktes Einvulkanisieren derselben vorgesehen.

Vorteilhafte Ausgestaltungen und Weiterbildungen der Erfindung sind den Unteransprüchen, sowie der Beschreibung unter Bezugnahme auf die Zeichnung entnehmbar.

Gemäß einer bevorzugten Weiterbildung umfasst die erste Antenne eine Drahtschleife, ein Drahtbügel oder eine Leiterbahnschleife, insbesondere auf einer Leiterplatte. Vorteilhaft wird somit eine besonders effiziente Induktionsübertragung der ersten Antenne realisiert, wobei bevorzugt Drahtschleifen oder Leiterbahnschleifen mit mehreren Windungen vorgesehen sind. Besonders vorteilhaft ist die besonders bevorzugte direkte Integration der ersten Antenne in eine Leiterplatte vorgesehen, da dies eine kostengünstige und einfache Herstellung der ersten Antenne im Herstellungsprozess der Leiterplatte ermöglicht, wobei die Leiterplatte insbesondere zur Verschaltung des Sensorelements, weiterer mikroelektronischer Bauelemente, der ersten Antenne und/oder weiterer passiver Bauelemente fungiert.

Gemäß einer weiteren bevorzugten Weiterbildung umfasst die zweite Antenne und/oder die dritte Antenne eine Drahtschleifen-, Helix-, Loop- und/oder Dipolantenne, wobei bevorzugt die zweite und dritte Antenne einstückig ausgebildet sind und wobei besonders bevorzugt die zweite und/oder die dritte Antenne mehrere Windungen aufweisen. Vorteilhaft ermöglicht die einstückige Ausbildung der zweiten und dritten Antenne eine kostengünstige Herstellung derselben in einem einzigen Herstellungsprozess. Eine Ausbildung der zweiten Antenne als Helix steigert ebenfalls die Effizienz der induktiven Signalübertragung. Insbesondere sind die Kopplungsebenen der ersten und zweiten Antenne im Wesentlichen parallel zueinander vorgesehen.

Gemäß einer weiteren bevorzugten Weiterbildung ist das Sensormodul innerhalb der als Drahtschleife oder Helix ausgebildeten zweiten Antenne angeordnet ist, wobei in vorteilhafter Weise die Effizienz der Induktionsübertragung weiter gesteigert wird. Zusätzlich ermöglicht diese Anordnung eine einfach zu realisierende, mechanische Fixierung zwischen dem Modulgehäuse und der Induktionseinheit, wobei bevorzugt eine vollständige Integration und/oder ein Verrasten bzw. Verklemmen der zweiten Antenne in das Modulgehäuse oder ein Aufkleben derselben auf das Modulgehäuse vorgesehen ist. Ebenso ist bevorzugt eine Anordnung der zweiten Antenne in einem weiteren Gehäuse vorgesehen, wobei das weitere Gehäuse mit dem Modulgehäuse verrastet und/oder verklebt ist.

Gemäß einer weiteren bevorzugten Weiterbildung weist die dritte Antenne zwei Teilbereiche auf, wobei die zweite Antenne zwischen den zwei Teilbereichen angeordnet ist und wobei bevorzugt die Teilbereiche als Dipolantenne ausgebildet sind. Vorteilhaft ist somit eine Einkopplung der Signale durch die zweite Antenne in die dritte Antenne besonders effizient, wobei eine Integration der als Dipol ausgebildeten dritten Antenne in einen Fahrzeugreifen in einfacher Weise ermöglicht wird.

Gemäß einer weiteren bevorzugten Weiterbildung ist dass das Sensormodul passive, mikroelektronische und/oder mikromechanische Bauelemente aufweist, bevorzugt wenigstens einen Reifendrucksensorchip, und dass die Bauelemente auf der Leiterplatte und/oder einer weiteren Leiterplatte angeordnet sind. Im Sinne der vorliegenden Erfindung umfasst eine Leiterplatte, sowohl flexible und starre Platinen, als auch eine beliebige Anzahl einzelner Leiterbahnen, welche als Platte und/oder auf einer Platte bzw. Ebene ausgebildet sind. In vorteilhafter Weise wird durch die Weiterbildung eine vergleichsweise kompakte und kostengünstig herstellbare Ausführung des Sensormoduls durch die Integration der Bauelemente und der ersten Antenne auf der einen Leiterplatte realisierbar. Die Einbindung eines Reifendrucksensorchips in das Sensormodul ermöglicht ferner die Realisation der Sensoranordnung als ein schnurloser Reifendrucksensor.

Gemäß einer weiteren bevorzugten Weiterbildung sind die Kopplungsebenen der ersten und der zweiten Antenne, welche insbesondere als Drahtschleifen ausgebildet sind, senkrecht zur Reifenlauffläche und/oder einer Stahlgürtelfläche ausgerichtet. Vorteilhaft werden somit Einflüsse der Stahlgürtelfläche auf die Kopplungseigenschaften bei der induktiven Signalübertragung zwischen der ersten und zweiten Antenne minimiert.

Ein weiterer Gegenstand der vorliegenden Erfindung ist ein Verfahren zum Betrieb einer Sensoranordnung, wobei elektrische Signale, welche von wenigstens einem der Bauelemente erzeugt werden, über die erste Antenne zur zweiten Antenne induktiv übertragen und von der dritten Antenne elektromagnetisch ausgestrahlt werden und/oder wobei elektromagnetische Signale von der dritten Antenne empfangen und über die zweite Antenne zur ersten Antenne induktiv übertragen werden, wobei die entsprechenden elektrischen Signale von der ersten Antenne zu wenigstens einem Bauelement geleitet werden. Vorteilhaft wird somit eine zuverlässige und sichere Signalübertragung bzw. ein Signalempfang und/oder eine Signalausstrahlung durch eine kompakte Sensoranordnung ermöglicht, welche vergleichsweise hohen mechanischen und/oder chemischen Belastungen ausgesetzt ist.

Ein weiterer Gegenstand der vorliegenden Erfindung ist eine Verwendung einer erfindungsgemäßen Sensoranordnung in einem Fahrzeugreifen, bevorzugt in einem Reifendruckkontrollsystem.

Ausführungsbeispiele der Erfindung sind in den Zeichnungen dargestellt und in der nachfolgenden Beschreibung näher erläutert.

### Kurze Beschreibung der Zeichnung

Es zeigen
**Figur 1** eine perspektivische schematische Ansicht einer Sensoranordnung gemäß einer ersten Ausführungsform der vorliegenden Erfindung,
**Figur 2** eine perspektivische schematische Ansicht eines Sensormoduls der Sensoranordnung gemäß der ersten Ausführungsform der vorliegenden Erfindung,
**Figur 3** eine perspektivische schematische Ansicht einer Sensoranordnung gemäß einer zweiten Ausführungsform der vorliegenden Erfindung,
**Figur 4** eine perspektivische schematische Ansicht eines Sensormoduls der Sensoranordnung gemäß der zweiten Ausführungsform der vorliegenden Erfindung,
**Figur 5** eine schematische Aufsicht einer Sensoranordnung gemäß einer dritten Ausführungsform der vorliegenden Erfindung,
**Figur 6a** und **Figur 6b** jeweils eine schematische Aufsicht und eine schematische Seitenansicht einer Sensoranordnung gemäß einer vierten und fünften Ausführungsform der vorliegenden Erfindung,
**Figur 7a** und **Figur 7b** jeweils eine schematische Aufsicht und eine schematische Seitenansicht einer Sensoranordnung gemäß einer sechsten und siebten Ausführungsform der vorliegenden Erfindung,
**Figur 8** eine schematische Ansicht eines elektrischen Ersatzschaltbildes der Sensoranordnung gemäß der ersten Ausführungsform der vorliegenden Erfindung,
**Figur 9** eine perspektivische schematische Ansicht einer Sensoranordnung gemäß einer achten Ausführungsform der vorliegenden Erfindung und
**Figur 10** eine schematische Seitenansicht einer Sensoranordnung gemäß einer neunten Ausführungsform der vorliegenden Erfindung, welche in einen Fahrzeugreifen integriert wird.

### Ausführungsform(en) der vorliegenden Erfindung

In den verschiedenen Figuren sind gleiche Teile stets mit den gleichen Bezugszeichen versehen und werden daher in der Regel auch jeweils nur einmal benannt.

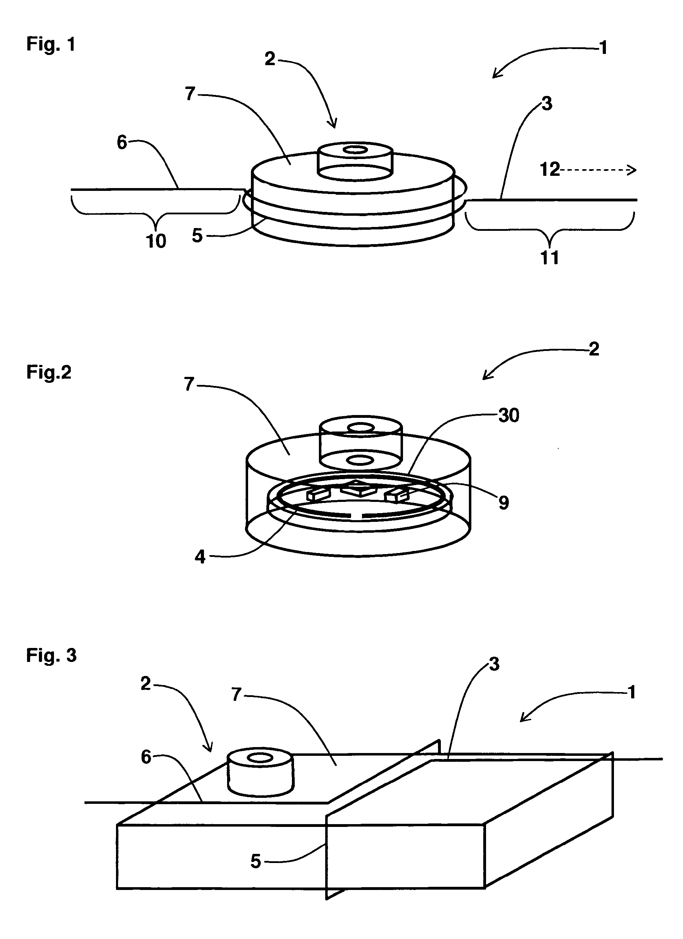

In **Figur 1** ist eine beispielhafte, perspektivische schematische Ansicht einer Sensoranordnung 1 gemäß einer ersten Ausführungsform der vorliegenden Erfindung dargestellt, wobei die Sensoranordnung 1 ein Sensormodul 2 und einer Induktionseinheit 3 aufweist, wobei das Sensormodul 2 eine erste nicht-abgebildete Antenne 4 aufweist und wobei die Induktionseinheit 3 eine zweite und dritte Antenne 5, 6 aufweist, wobei eine Induktionsübertragung von Signalen zwischen der ersten und der zweiten Antenne 4, 5 vorgesehen ist und wobei die Signale von der dritten Antenne 6 elektromagnetisch gesendet und empfangen werden. Das Sensormodul 2 ist von einem zylinderförmigen Modulgehäuse 7 und von der Induktionseinheit 3 umschlossen, wobei die zweite und dritte Antenne 5, 6 einstückig ausgebildet sind. Die zweite Antenne 5 umfasst eine Helixform mit eineinhalb Windungen, wobei die dritte Antenne 6 zwei Teilbereiche 10, 11 aufweist und wobei die zweite Antenne 5 zwischen den zwei Teilbereichen 10, 11 angeordnet ist und die Teilbereiche 10, 11 als Dipolantenne parallel zu einer Geraden 12 ausgebildet sind. Das Sensormodul 2 ist innerhalb der als Helix ausgebildeten zweiten Antenne 5 angeordnet.

In **Figur 2** ist eine beispielhafte, perspektivische schematische Ansicht eines Sensormoduls 2 der Sensoranordnung 1 gemäß der ersten Ausführungsform der vorliegenden Erfindung dargestellt, wobei das Sensormodul 2 die erste Antenne 4 aufweist, welche wenigstens eine Leiterbahnschleife auf einer Leiterplatte 30 umfasst. Ferner weist das Sensormodul 2 passive, mikroelektronische und mikromechanische Bauelemente 9 auf der Leiterplatte 30 aufweist, insbesondere einen Reifendrucksensorchip. Die Kopplungsebenen der ersten und der zweiten Antenne 4, 5 sind im Wesentlichen parallel zueinander.

In **Figur 3** ist eine beispielhafte, perspektivische schematische Ansicht einer Sensoranordnung 1 gemäß einer zweiten Ausführungsform der vorliegenden Erfindung dargestellt, wobei die zweite Ausführungsform identisch zur ersten Ausführungsform illustriert in Figur 1 ist, wobei lediglich die Kopplungsebenen der nicht abgebildeten ersten und abgebildeten zweiten Antenne 4, 5 senkrecht zu einer nicht abgebildeten Stahlgürtelfläche 31 und damit auch senkrecht zur Leiterplatte 30 ausgerichtet sind und wobei die zweite Antenne 5 als eine rechteckige Leiterschlaufe mit eineinhalb Windungen und das Modulgehäuse 7 quaderförmig ausgebildet sind.

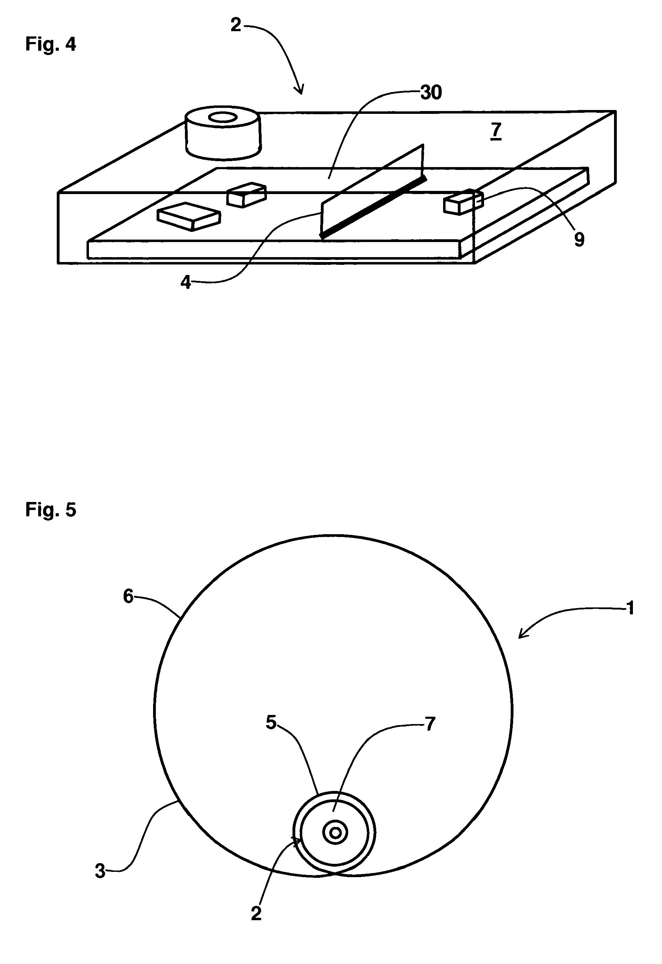

In **Figur 4** ist eine perspektivische schematische Ansicht eines Sensormoduls 2 der Sensoranordnung 1 gemäß der zweiten Ausführungsform der vorliegenden Erfindung dargestellt, wobei die zweite Ausführungsform identisch zur ersten Ausführungsform illustriert in Figur 2 ist, wobei lediglich das Modulgehäuse 7 quaderförmig, die Leiterplatte 30 rechteckig und die erste Antenne 4 als Drahtbügel ausgebildet sind, wobei die Kopplungsebene der ersten Antenne 4 senkrecht zur Leiterplatte 30 und parallel zur nicht abgebildeten zweiten Antenne 5 verläuft.

In **Figur 5** ist eine schematische Aufsicht einer Sensoranordnung 1 gemäß einer dritten Ausführungsform der vorliegenden Erfindung dargestellt, wobei die dritte Ausführungsform identisch zur ersten Ausführungsform illustriert in Figur 1 ist, wobei lediglich die beiden Teilbereiche 10, 11 der dritten Antenne 6 miteinander verbunden sind, so dass die dritte Antenne 6 eine Loopantenne mit einer Windung umfasst und wobei die zweite Antenne 5 ebenfalls lediglich eine Windung aufweist.

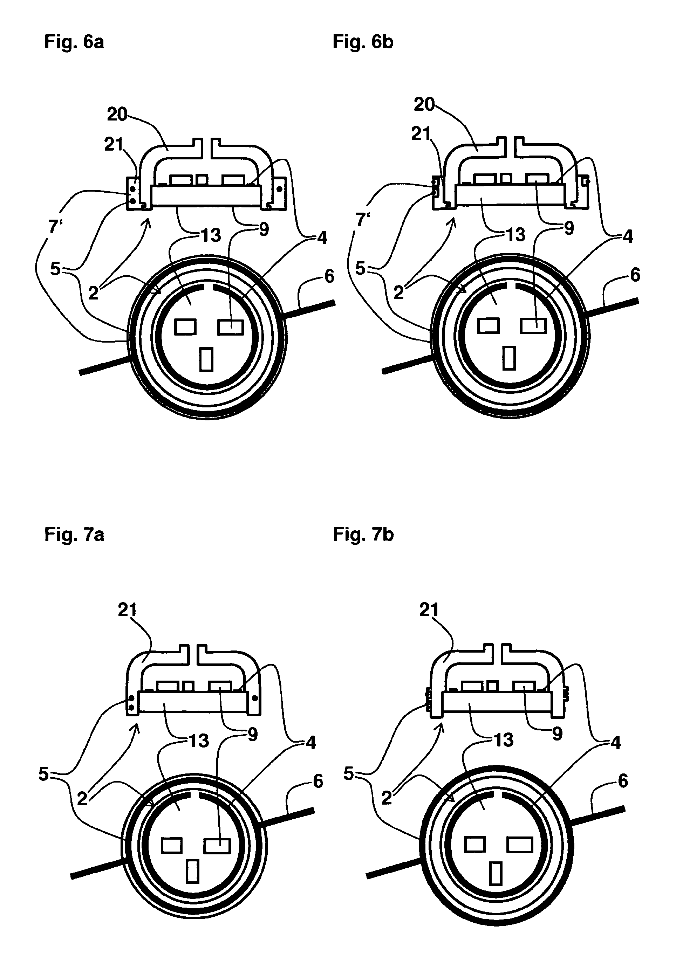

In **Figur 6a und Figur 6b** sind jeweils eine schematische Aufsicht und eine schematische Seitenansicht einer Sensoranordnung gemäß einer vierten und fünften Ausführungsform der vorliegenden Erfindung dargestellt, wobei die vierte und fünfte Ausführungsform im Wesentlichen identisch mit der ersten Ausführungsform illustriert in Figur 1 und Figur 2 ist, wobei lediglich in der vierten Ausführungsform dargestellt in **Figur 6a** die zweite Antenne 5 in ein weiteres Gehäuse 7' integriert ist und wobei lediglich in der fünften Ausführungsform dargestellt in **Figur 6b** die zweite Antenne 5 mit dem weiteren Gehäuse 7' verrastet und/oder verklebt ist. Das zweite Gehäuse 7' weist insbesondere eine stoffschlüssige, formschlüssige und/oder kraftschlüssige Verbindung mit dem Modulgehäuse 7 auf.

In **Figur 7a und Figur 7b** sind jeweils eine schematische Aufsicht und eine schematische Seitenansicht einer Sensoranordnung gemäß einer sechsten und siebten Ausführungsform der vorliegenden Erfindung dargestellt, wobei die sechste und siebte Ausführungsform im Wesentlichen identisch mit der ersten Ausführungsform illustriert in Figur 1 und Figur 2 ist, wobei lediglich in der sechsten Ausführungsform dargestellt in **Figur 7a** die zweite Antenne 5 in das Modulgehäuse 7 integriert ist und wobei lediglich in der siebten Ausführungsform dargestellt in **Figur 7b** die zweite Antenne 5 mit dem Modulgehäuse 7 verrastet und/oder verklebt ist. Das Modulgehäuse weist dazu insbesondere Aussparungen im Bereich der zweiten Antenne auf.

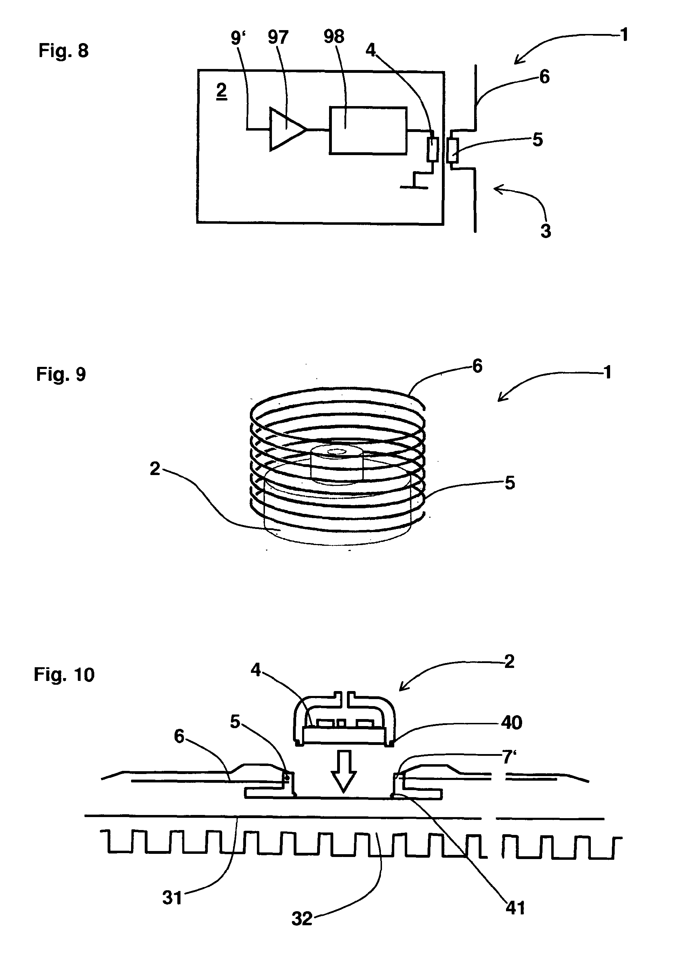

In **Figur 8** ist eine beispielhafte schematische Ansicht eines elektrischen Ersatzschaltbildes der Sensoranordnung 1 gemäß der ersten Ausführungsform der vorliegenden Erfindung dargestellt, wobei ein Bauelement 9 im Sensormodul 2, insbesondere ein Drucksensor 9', ein Signal erzeugt, welches in die erste Antenne 4 eingekoppelt wird. Das Signal wird induktiv auf die zweite Antenne 5 übertragen und in die dritte Antenne 6 eingekoppelt, so dass eine elektromagnetische Abstrahlung des Signals erfolgt. Ebenso ist ein umgekehrter Signalweg zum Empfangen von elektromagnetischen Signalen durch die dritte Antenne vorgesehen, wobei die empfangenen Signale über die induktive Kopplung von der zweiten zur ersten Antenne 5, 4 zu einem Bauelement 9 des Sensormoduls 9 geleitet werden. Bevorzugt wird das Signal des Drucksensors 9' vor der Einkopplung in die erste Antenne 4 in einer HF-Endstufe 97 verstärkt, wobei in einem auf die HF-Endstufe 97 folgenden Anpassungsnetzwerk 98 eine Impedanzanpassung vorgenommen wird.

In **Figur 9** ist eine perspektivische schematische Ansicht einer Sensoranordnung gemäß einer achten Ausführungsform der vorliegenden Erfindung dargestellt, wobei die achte Ausführungsform identisch zur ersten Ausführungsform illustriert in Figur 1 ist und wobei lediglich die dritte Antenne 6 als Helix mit einer Mehrzahl von Windungen ausgebildet ist.

In **Figur 10** ist eine schematische Seitenansicht einer Sensoranordnung 1 gemäß einer neunten Ausführungsform der vorliegenden Erfindung dargestellt, welche in einen Fahrzeugreifen 32 integriert wird und wobei die neunte Ausführungsform im Wesentlichen identisch zur vierten Ausführungsform illustriert in Figur 6a ist, wobei lediglich die Induktionseinheit 3 in einem Fahrzeugreifen 32 mit einer Stahlgürtelfläche 31 einvulkanisiert ist. Das Sensormodul 2 wird durch ein einfaches Eindrücken in das weitere Gehäuse 7' in den Fahrzeugreifen 32 integriert, wobei ein Verrasten einer Ausformung 41 im weiteren Gehäuse 7' mit einer entsprechenden Aussparung 40 im Modulgehäuse 7 vorgesehen ist.

## Patentansprüche

1. Sensoranordnung (1) mit einem Sensormodul (2) und einer Induktionseinheit (3), wobei das Sensormodul (2) eine erste Antenne (4) aufweist, **dadurch gekennzeichnet, dass** die Induktionseinheit (3) eine zweite und dritte Antenne (5, 6) aufweist, wobei eine Induktionsübertragung von Signalen zwischen der ersten und der zweiten Antenne (4, 5) vorgesehen ist und wobei die Signale von der dritten Antenne (6) elektromagnetisch gesendet und/oder empfangen werden.

2. Sensoranordnung (1) nach einem der vorhergehenden Ansprüche, **dadurch gekennzeichnet, dass** das Sensormodul (2) von einem Modulgehäuse (7) und/oder zumindest teilweise von der Induktionseinheit (3) umschlossen ist.

3. Sensoranordnung (1) nach einem der vorhergehenden Ansprüche, **dadurch gekennzeichnet, dass** die erste Antenne (4) eine Drahtschleife, ein Drahtbügel oder eine Leiterbahnschleife, insbesondere auf einer Leiterplatte (30), umfasst.

4. Sensoranordnung (1) nach einem der vorhergehenden Ansprüche, **dadurch gekennzeichnet, dass** die zweite Antenne (5) und/oder die dritte Antenne (6) eine Drahtschleifen-, Helix-, Loop- und/oder Dipolantenne umfasst, wobei bevorzugt die zweite und dritte Antenne (5, 6) einstückig ausgebildet sind und wobei besonders bevorzugt die zweite und/oder die dritte Antenne (5, 6) mehrere Windungen aufweisen.

5. Sensoranordnung (1) nach einem der vorhergehenden Ansprüche, **dadurch gekennzeichnet, dass** das Sensormodul (2) innerhalb der als Drahtschleife oder Helix ausgebildeten zweiten Antenne (5) angeordnet ist.

6. Sensoranordnung (1) nach einem vorhergehenden Ansprüche, **dadurch gekennzeichnet, dass** die dritte Antenne (6) zwei Teilbereiche (10, 11) aufweist, wobei die zweite Antenne (5) zwischen den zwei Teilbereichen (10, 11) angeordnet ist und wobei bevorzugt die Teilbereiche (10, 11) als Dipolantenne ausgebildet sind.

7. Sensoranordnung (1) nach einem der vorhergehenden Ansprüche, **dadurch gekennzeichnet, dass** die Induktionseinheit (3) in einen Fahrzeugreifen (30) integriert und bevorzugt in das Fahrzeugreifenmaterial im Herstellungsprozess des Fahrzeugreifens (32) einvulkanisiert ist.

8. Sensoranordnung (1) nach einem der vorhergehenden Ansprüche, **dadurch gekennzeichnet, dass** das Sensormodul (1) passive, mikroelektronische und/oder mikromechanische Bauelemente (9) aufweist, bevorzugt wenigstens einen Reifendrucksensorchip, und dass die Bauelemente (9) auf der Leiterplatte (30) und/oder einer weiteren Leiterplatte angeordnet sind.

9. Sensoranordnung (1) nach einem der vorhergehenden Ansprüche, **dadurch gekennzeichnet, dass** die Kopplungsebenen der ersten und der zweiten Antenne (5, 6), welche insbesondere als Drahtschleifen ausgebildet sind, senkrecht zur Reifenlauffläche und/oder einer Stahlgürtelfläche (31) ausgerichtet sind.

10. Verfahren zum Betrieb einer Sensoranordnung (1) gemäß einem der vorhergehenden Ansprüche, **dadurch gekennzeichnet, dass** elektrische Signale, welche von wenigstens einem der Bauelemente (9) erzeugt werden, über die erste Antenne (4) zur zweiten Antenne (5) induktiv übertragen und von der dritten Antenne (6) elektromagnetisch ausgestrahlt werden.

11. Verfahren zum Betrieb einer Sensoranordnung (1) gemäß einem der Ansprüche 1 bis 10, **dadurch gekennzeichnet, dass** elektromagnetische Signale von der dritten Antenne (6) empfangen und über die zweite Antenne (5) zur ersten Antenne (4) induktiv übertragen werden, wobei die entsprechenden elektrischen Signale von der ersten Antenne (4) zu wenigstens einem Bauelement (9) geleitet werden.

12. Sensoranordnung (1) nach einem der Ansprüche 1 bis 10 zur Verwendung in einem Fahrzeugreifen (32), bevorzugt in einem Reifendruckkontrollsystem.

## Claims

1. Sensor arrangement (1) comprising a sensor module (2) and an induction unit (3), the sensor module (2) having a first antenna (4), **characterized in that** the induction unit (3) has a second and a third antenna (5, 6), an induction transmission of signals being provided between the first and the second antenna (4, 5) and the signals being sent and/or received electromagnetically by the third antenna (6).

2. Sensor arrangement (1) according to one of the preceding claims, **characterized in that** the sensor module (2) is enclosed by a module housing (7) and/or at least partially by the induction unit (3).

3. Sensor arrangement (1) according to one of the preceding claims, **characterized in that** the first antenna (4) comprises a wire loop, a wire bow or a strip conductor loop, in particular on a printed circuit board (30).

4. Sensor arrangement (1) according to one of the preceding claims, **characterized in that** the second antenna (5) and/or the third antenna (6) comprises a wire loop antenna, a helix antenna, a loop antenna and/or a dipole antenna, preferably the second and the third antenna (5, 6) being formed in one piece, and particularly preferably the second and/or the third antenna (5, 6) having a plurality of turns.

5. Sensor arrangement (1) according to one of the preceding claims, **characterized in that** the sensor module (2) is arranged within the second antenna (5) formed as a wire loop or helix.

6. Sensor arrangement (1) according to one of the preceding claims, **characterized in that** the third antenna (6) has two subsections (10, 11), the second antenna (5) being arranged between the two subsections (10, 11), and the subsections (10, 11) preferably being formed as a dipole antenna.

7. Sensor arrangement (1) according to one of the preceding claims, **characterized in that** the induction unit (3) is integrated in a vehicle tyre (32) and is preferably vulcanized into the material of the vehicle tyre in the process of producing the vehicle tyre (32).

8. Sensor arrangement (1) according to one of the preceding claims, **characterized in that** the sensor module (1) has passive, microelectronic and/or micromechanical components (9), preferably at least one tyre pressure sensor chip, and **in that** the components (9) are arranged on the printed circuit board (30) and/or a further printed circuit board.

9. Sensor arrangement (1) according to one of the preceding claims, **characterized in that** the coupling planes of the first and the second antenna (5, 6), which are formed in particular as wire loops, are aligned perpendicularly to the tyre tread and/or a steel belt surface (31).

10. Method for operating a sensor arrangement (1) according to one of the preceding claims, **characterized in that** electrical signals, which are generated by at least one of the components (9), are inductively transmitted via the first antenna (4) to the second antenna (5) and electromagnetically emitted by the third antenna (6).

11. Method for operating a sensor arrangement (1) according to one of Claims 1 to 10, **characterized in that** electromagnetic signals are received by the third antenna (6) and inductively transmitted via the second antenna (5) to the first antenna (4), the corresponding electrical signals being passed from the first antenna (4) to at least one component (9).

12. Sensor arrangement (1) according to one of Claims 1 to 10 for use in a vehicle tyre (32), preferably in a tyre pressure control system.

## Revendications

1. Ensemble de capteur (1) doté d'un module de capteur (2) et d'une unité d'induction (3), le module de capteur (2) présentant une première antenne (4), **caractérisé en ce que**
l'unité d'induction (3) présente une deuxième et une troisième antenne (5, 6),
**en ce qu'**une transmission par induction de signaux entre la première et la deuxième antenne (4, 5) est prévue et
**en ce que** les signaux sont envoyés et/ou reçus électromagnétiquement par la troisième antenne (6).

2. Ensemble de capteur (1) selon la revendication précédente, **caractérisé en ce que** le module de capteur (2) est entouré par un boîtier de module (7) et/ou au moins en partie par l'unité d'induction (3).

3. Ensemble de capteur (1) selon l'une des revendications précédentes, **caractérisé en ce que** la première antenne (4) comporte une boucle de fil, un étrier de fil ou une boucle en piste conductrice, en particulier placés sur une carte de circuit (30).

4. Ensemble de capteur (1) selon l'une des revendications précédentes, **caractérisé en ce que** la deuxième antenne (5) et/ou la troisième antenne (6) comportent une antenne en boucle de fil, en hélice, en boucle ou une antenne dipolaire, la première et la troisième antenne (5, 6) étant de préférence réalisées d'une seule pièce et la deuxième et/ou la troisième antenne (5, 6) présentant de façon particulièrement préférable plusieurs enroulements.

5. Ensemble de capteur (1) selon l'une des revendications précédentes, **caractérisé en ce que** le module de capteur (2) est disposé à l'intérieur de la deuxième antenne (5) configurée comme boucle de fil ou en hélice.

6. Ensemble de capteur (1) selon l'une des revendications précédentes, **caractérisé en ce que** la troisième antenne (6) présente deux parties (10, 11), la deuxième antenne (5) étant disposée entre les deux parties (10, 11), les parties (10, 11) étant de préférence configurées comme antennes dipolaires.

7. Ensemble de capteur (1) selon l'une des revendications précédentes, **caractérisé en ce que** l'unité d'induction (3) est intégrée dans un bandage (32) pour roue de véhicule et est incorporée par vulcanisation dans le matériau du bandage pour roue de véhicule lors de l'opération de fabrication du bandage (32) pour roue de véhicule.

8. Ensemble de capteur (1) selon l'une des revendications précédentes, **caractérisé en ce que** le module de capteur (1) présente des composants microélectroniques et/ou micromécaniques passifs (9), de préférence au moins une puce de capteur de pression de bandage de roue, et **en ce que** les composants (9) sont disposés sur la carte de circuit (30) et/ou sur une autre carte de circuit.

9. Ensemble de capteur (1) selon l'une des revendications précédentes, **caractérisé en ce que** les plans d'accouplement de la première et de la deuxième antenne (5, 6) configurées en particulier comme boucles de fil sont orientés perpendiculairement à la surface de roulement du bandage de roue et/ou à une surface (31) de ceinture en acier.

10. Procédé d'utilisation d'un ensemble de capteur (1) selon l'une des revendications précédentes, **caractérisé en ce que** des signaux électriques formés par au moins l'un des composants (9) sont transmis par induction vers la deuxième antenne (5) par l'intermédiaire de la première antenne (4) et sont émis électromagnétiquement par la troisième antenne (6).

11. Procédé d'utilisation d'un ensemble de capteur (1) selon l'une des revendications 1 à 10, **caractérisé en ce que** des signaux électromagnétiques sont reçus par la troisième antenne (6) et sont transmis par induction à la première antenne (4) par l'intermédiaire de la deuxième antenne (5), les signaux électriques correspondants étant amenés par la première antenne (4) vers au moins un composant (9).

12. Ensemble de capteur (1) selon l'une des revendications 1 à 10, destiné à être utilisé dans un bandage (32) pour roue de véhicule et de préférence dans un système de contrôle de la pression des bandages de roues.
